# EUROPEAN PATENT SPECIFICATION

(11) **EP 2 210 366 B1**
(45) Date of publication and mention of the grant of the patent: **13.02.2019**
(21) Application number: 07873370.6
(22) Date of filing: 26.10.2007
(51) Int. Cl.: H04L 29/06

(54) **METHODS AND SYSTEMS FOR TRANSFERRING MULTIMEDIA CONTENT USING AN EXISTING DIGITAL SOUND TRANSFER PROTOCOL**
VERFAHREN UND SYSTEME ZUM TRANSFER VON MULTIMEDIAINHALT UNTER VERWENDUNG EINES EXISTIERENDEN DIGITALTONTRANSFERPROTOKOLLS
PROCÉDÉS ET SYSTÈMES PERMETTANT DE TRANSFÉRER UN CONTENU MULTIMÉDIA À L'AIDE D'UN PROTOCOLE DE TRANSFERT DE SON NUMÉRIQUE EXISTANT

(43) Date of publication of application: 28.07.2010
(73) Proprietor: Chouraqui, Jean, 13100 Aix-en-Provence (FR); Nguyen, Hung, Quebec H4P 1C3 (CA)
(72) Inventor: Chouraqui, Jean, 13100 Aix-en-Provence (FR); Nguyen, Hung, Quebec H4P 1C3 (CA)
(74) Representative: Patel, Binesh
(86) International application number: PCT/IB2007/004607
(87) International publication number: WO 2009/053772

(56) References cited:
- EP-A- 1 670 248
- EP-A- 1 670 248
- WO-A-2005/020580
- WO-A-2005/020580
- WO-A1-02/082837
- WO-A1-03/032209
- US-A1- 2002 120 564
- AIGN S ET AL: "MPEG-4 VIDEO TRANSMISSION VIA DAB: ERROR DETECTION AND ERROR CONCEALMENT", PROCEEDINGS OF THE PICTURE CODING SYMPOSIUM, XX, XX, no. 143, 1 January 1997 (1997-01-01), pages 731-736, XP001156648,
- AIGN S ET AL: "MPEG-4 VIDEO TRANSMISSION VIA DAB: ERROR DETECTION AND ERROR CONCEALMENT" PROCEEDINGS OF THE PICTURE CODING SYMPOSIUM, XX, XX, no. 143, 1 January 1997 (1997-01-01), pages 731-736, XP001156648

## Description

### TECHNICAL FIELD

The present principles relate generally to multimedia and, more particularly, to methods and systems for transferring multimedia content using an existing digital sound transfer protocol.

### BACKGROUND

Currently, the capabilities of the second generation of the Global System for Mobile Communications (GSM) in Europe and the Personal Communications Service (PCS) in the United States with respect to transferring multimedia content, including, for example, video content, are limited due to the difficulties encountered in accomplishing the same.

The Universal Mobile Telecommunications System (UMTS) provides one solution for transferring multimedia content using a telephony network, but also includes at least one significant disadvantage. Namely, the cost is very high for each operator and, consequently, for the client as well.

Hence, UMTS is too expensive. This is the main reason which motivates operators in mobile telephony to search for less expensive alternatives for transferring multimedia content over a mobile telephony network.

Art related to the present principles includes WIPO Publication No. 2005/020580. The reference is directed to providing a multimedia service in a digital audio broadcasting (DAB) transmission system. In accordance with the reference, a Moving Pictures Experts Group (MPEG) transport stream is modified so that it can be transmitted in ensemble transport interface (ETI) frames.

### SUMMARY

These and other drawbacks and disadvantages of the prior art are addressed by the present principles, which are directed to a system per claim 1 and a method per claim 5 which allow for transferring multimedia content using an existing digital sound transfer protocol. Preferred embodiments are defined by the dependent claims.

These and other aspects, features and advantages of the present principles will become apparent from the following detailed description of exemplary embodiments, which is to be read in connection with the accompanying drawings.

### BRIEF DESCRIPTION OF THE DRAWINGS

The present principles may be better understood in accordance with the following exemplary figures, in which:
FIG 1 is a block diagram illustrating a computer processing system 100 to which the present principles may be applied, according to an embodiment of the present principles;
FIG. 2 is a block diagram for an exemplary system 200 for transferring multimedia content using an existing digital sound transfer protocol, in accordance with an embodiment of the present principles;
FIG. 3 is a block diagram for another exemplary system 300 for transferring multimedia content using an existing digital sound transfer protocol, in accordance with an embodiment of the present principles;
FIG. 4 is a flow diagram for an exemplary method 400 for transferring multimedia content using an existing digital sound transfer protocol, in accordance with an embodiment of the present principles;
FIG. 5 is a flow diagram for an exemplary method 500 for transforming a multimedia file into a sound file, in accordance with an embodiment of the present principles; and
FIG. 6 is a flow diagram for an exemplary method 600 for reconstructing a multimedia file from a sound file in accordance with an embodiment of the present principles.

### DETAILED DESCRIPTION

The present principles are directed to methods and systems for transferring multimedia content using an existing digital sound transfer protocol.

The present description illustrates the present principles. It will thus be appreciated that those skilled in the art will be able to devise various arrangements that, although not explicitly described or shown herein, embody the present principles and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles means that a particular feature, structure, characteristic, and so forth described in connection with the embodiment is included in at least one embodiment of the present principles. Thus, the appearances of the phrase "in one embodiment" or "in an embodiment" appearing in various places throughout the specification are not necessarily all referring to the same embodiment.

It is to be appreciated that the use of the terms "and/or" and "at least one of", for example, in the cases of "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

It is to be appreciated that while various embodiments of the present principles described herein relate to the use of WAV files as one type of digital sound file to which the present principles may be applied, it is to be appreciated that the present principles are not limited solely to the use of WAV files and, thus, other types of digital sound files may also be used, according to the present principles. Preferably, the type of digital sound file used is a lossless type of digital sound file, so that the original content included in the multimedia file from which the sound file is created may be preserved in its entirety. Thus, in the case of WAV files, while a non-PCM modulation technique may be used to generate such WAV files, it is preferable to use Pulse Code Modulation (PCM) modulation which may be configured to provide such lossless capability.

It is to be further appreciated that as used herein, the term "multimedia" refers to content or a file that includes at least two different types of media that are directly perceptible to a user (such as video and/or data that is seen and audio that is heard, versus, for example, data (hereinafter referred to as "other data") such as, but not limited to, side data that is not seen by a user, but rather may act upon data that is seen by a user). While it is to also be appreciated that the multimedia file may include such other data and, further, that the present principles are also readily capable of dealing with such other data in the herein described transformation and reconstruction processes, it is to be appreciated that the "multi" aspect of the term multimedia as used herein with respect to a "multimedia file" is nonetheless directed to the transformation of at least two different types of data that are directly perceptible to a user. Hence, the present principles are particularly suited to movies, for example, as represented by MPEG-2 and MPEG-4 AVC files, as such movies will have a video component and an audio component in the case of non-silent movies, where both components are directly perceptible to a user. Advertisements having a video component and an audio component would also be particularly suited for use in accordance with the present principles.

As noted above, the present principles are directed to methods and systems for transferring multimedia content using an existing digital sound transfer protocol. It is to be appreciated that the file of the multimedia content to be transferred can originally be of any form.

For example, a video sequence may be represented by, but is not limited to, any of the following file formats: audio video interleave (AVI); the International Organization for Standardization/International Electrotechnical Commission (ISO/IEC) Moving Picture Experts Group-1 (MPEG-1) Standard; the ISO/IEC MPEG-2 Standard, the International Telecommunication Union, Telecommunication Sector (ITU-T) H.263 Recommendation; the ISO/IEC MPEG-4 Part 2 Advanced Video Coding (AVC) Standard (hereinafter the "MPEG-4 Part 2 Standard"); the ISO/IEC MPEG-4 Part 10 Advanced Video Coding (AVC) standard/ITU-T H.264 recommendation (hereinafter the "MPEG-4 AVC standard"); and so forth

An image may be represented by, but is not limited to, any of the following file formats: joint photographic experts group (JPEG); JPG; JPE; JFIF; JIF; bitmap (BMP); tagged image file format (TIFF); tagged image file format/electronic photography (TIFF/EP); graphics interchange format (GIF); portable network graphics (PNG); and so forth.

Data may be represented by, but is not limited to, any of the following file formats: text; RAR; portable document format (PDF); ZIP; ASCII, and so forth.

An illustrative overview of an exemplary embodiment of the present principles will now be described. However, it is to be appreciated that, given the teachings of the present principles provided herein, one of ordinary skill in this and related arts will contemplate this and various other embodiments and variations thereof, according to the present principles.

In the embodiment, the multimedia content is input to a binary conversion process that converts the multimedia content into corresponding, representative binary values.

The binary data is then transformed into a digital sound file using a transformation process as described in further detail herein below. In an embodiment, the sound file may be, but is not limited to, a WAV file. In an embodiment, the WAV file has a frequency represented by a variable hereinafter referred to as "FS" (with the unit of measure in, e.g., Hertz) and a number of bits represented by a variable hereinafter referred to as "NBITS". The WAV file may be, for example, a WAV file using a lossy modulation format, a WAV file using a lossless modulation format (e.g., pulse code modulation (PCM)), and so forth.

It is to be appreciated that the transformation of a multimedia file into a sound file is identical for all types of multimedia files. That is, the transformation ignores the nature and structure of the multimedia file. Accordingly, a JPEG, MPEG-2 and RAR file is read in the same way in order to obtain representative binary values. In particular, in the case of files corresponding to the MPEG-2 Standard or the MPEG-4 AVC Standard, the synchronization between the video part and the audio part is not changed during the transformation, but is instead preserved.

The WAV file, which includes the digital sounds corresponding to the above multimedia content, will be transferred to the destination with an existing protocol used to carry digital sounds.

When the WAV file having the digital sounds is received, the multimedia content may be recovered intact using a recovery process as described in further detail herein below.

In an embodiment, the quality of the multimedia content that is recovered is identical to the quality of the multimedia content prior to the binary conversion. That is, one or more embodiments of the present principles provide a lossless way to transform, transfer, and reconstruct the multimedia content. If course, such absence of loss refers to aspects of the present principles relating to transformation and reconstruction of multimedia content with respect to a sound file, and not to any compression initially applied to the multimedia content such as, for example, when the multimedia content that is input into a system in accordance with the present principles is already compressed such as in the case of a file encoded in accordance with the MPEG-4 AVC Standard.

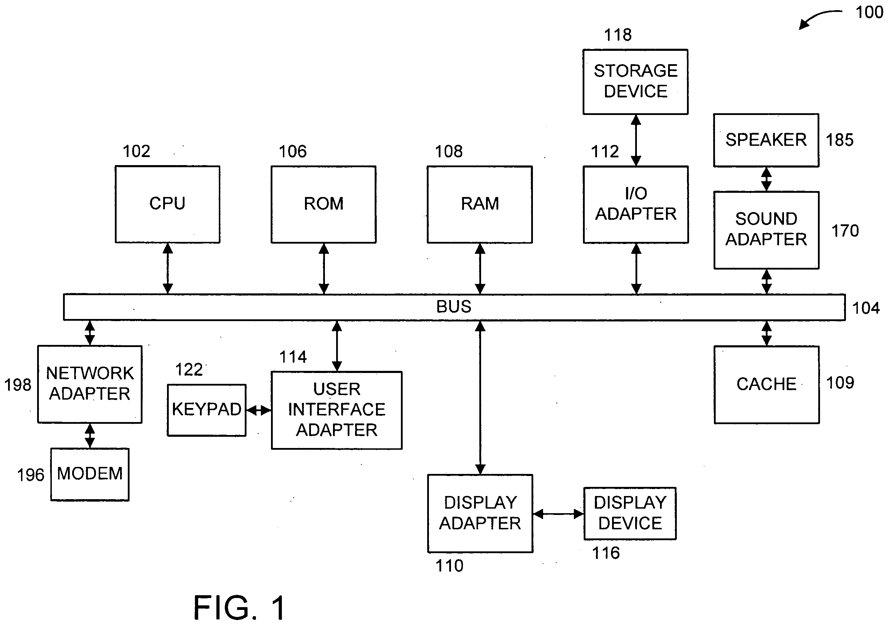

FIG. 1 is a block diagram illustrating a computer processing system 100 to which the present principles may be applied, according to an embodiment of the present principles. It is to be appreciated that the computer processing system 100 may be implemented in another device. For example, in an embodiment, the computer processing system 100 is implemented in a mobile telephone. Of course, the present principles are not limited to computer processing systems implemented in mobile telephones and, thus, the present principles may be implemented in other devices according to the present principles. For example, personal digital assistants, tablets, e-books, and so forth are just some of the types of devices that include a computer processing system to which the present principles may be applied, according to the present principles.

The computer processing system 100 includes at least one processor (CPU) 102 operatively coupled to other components via a system bus 104. A read only memory (ROM) 106, a random access memory (RAM) 108, cache 109, a display adapter 110, an I/O adapter 112, a user interface adapter 114, a sound adapter 170, and a network adapter 198, are operatively coupled to the system bus 104.
A display device 116 is operatively coupled to system bus 104 by display adapter 110. A storage device (e.g., a magnetic or optical disk storage device) 118 is operatively coupled to system bus 104 by I/O adapter 112.

A keyboard 122 is operatively coupled to system bus 104 by user interface adapter 114. The keyboard 122 is used to input and output information to and from system 100. Of course, the computer processing system 100 is not limited to solely keyboards with respect to input devices and, thus, other input devices may also be used, according to the present principles.

At least one speaker (herein after "speaker") 185 is operatively coupled to system bus 104 by sound adapter 170.

A (digital and/or analog) modem 196 is operatively coupled to system bus 104 by network adapter 198. The modem 196 is preferably a wireless modem, such that the sound file to be transferred may be so transferred wirelessly using a wireless communication protocol. Preferably, such wireless communication protocol is an existing digital sound transfer protocol.

It is to be appreciated that the elements of the computer processing system 100 and the configurations of such elements thereof are merely illustrative and, thus, implementations of a computer processing system to which the present principles may be applied are not limited to the preceding elements and configurations. Thus, given the teachings of the present principles provided herein, one of ordinary skill in this and related arts will contemplate this and various other elements and corresponding arrangements, and variations thereof, according to the present principles. Accordingly, in other embodiments, one or more elements may be omitted and/or one or more elements may be added, and/or different configurations of the elements may exist, all according to the present principles.

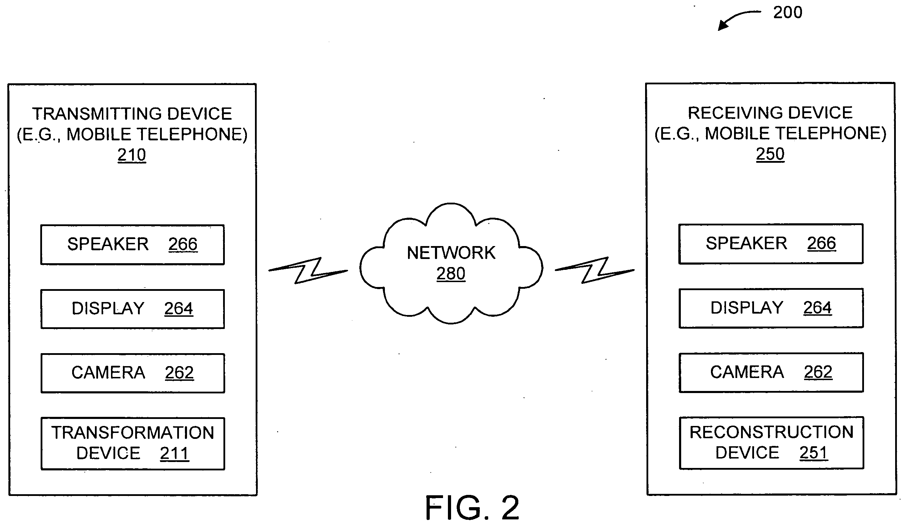

Turning to FIG. 2, an exemplary system for transferring multimedia content using an existing digital sound transfer protocol is indicated generally by the reference numeral 200.

The system 200 includes a transformation device 211 and a reconstruction device 251. In an embodiment, the transformation device 211 is disposed in a transmitting device 210, and the reconstruction device 251 is disposed in a receiving device 250.

In an embodiment, the transmitting device 210 and the receiving device 250 are implemented as respective mobile telephones. Of course, implementations of the transmitting device 210 and the receiving device 250 are not limited to solely mobile telephones and, thus, other types of devices may also be used, according to the present principles. For example, personal digital assistants, tablets, e-books, and so forth are just some of the types of devices to which the present principles may be applied, according to the present principles.

Communications between the transmitting device 210 and the reconstruction device 251 are performed over one or more networks (hereinafter simply "network" for brevity) 280.

In the case when the transmitting device 210 and the receiving device 250 are implemented as respective mobile telephones, any of the transmitting device 210 and the receiving device 250 may include a camera 262, a display 264, and a speaker 266. As an example, the camera 262 in the receiving device 210 may be used to capture a video sequence from which the multimedia file is generated. As an example, such multimedia file may be an MPEG-2 file. The transformation device 211 in the transmitting device 210 (e.g., the mobile telephone) may be used to transform the MPEG-2 file into a sound file. The reconstruction device 251 in the receiving device 250 may be used to reconstruct the sound file from the MPEG-2 file after the sound file is transferred over the network 280 using, for example, the existing digital sound transfer protocol of the network 280. The display device 264 in the receiving device 250 may be used to display a video portion of the multimedia content corresponding to the reconstructed multimedia file (e.g., the reconstructed MPEG-2 file), and the speaker 266 in the receiving device 250 may be used to audibly reproduce an audio portion of the multimedia content corresponding to the reconstructed multimedia file.

It is to be appreciated that the elements and arrangement thereof of the system 200 of FIG. 2 are merely illustrative. Thus, given the teachings of the present principles provided herein, one of ordinary skill in this and related arts will contemplate this and various other elements and corresponding arrangements, and variations thereof, according to the present principles. Accordingly, in other embodiments, one or more elements may be omitted and/or one or more elements may be added, and/or different configurations of the elements may exist, according to the present principles.

For example, while in the embodiment shown and described with respect to FIG. 2 shows the transformation device 211 disposed in the transmitting device 210 and the reconstruction device 251 disposed in the receiving device 250, in another embodiment, the transformation device 211 may be disposed separate from the transmitting device 210, and the reconstruction device 251 may be disposed separate from the receiving device 250, so that the transformation device 211 and reconstruction device 251 are implemented as separate elements with respect to the transmitting device 210 and the receiving device 250. In such a case, the transformation device 211 is provided with the capability to provide the transformed multimedia content (e.g., the WAV file) to the transmitting device 210 for transmission, and the reconstruction device 251 is provided with the capability to receive the transformed multimedia content from the receiving device 250. Moreover, in yet another embodiment, it is to be appreciated that the transformation device 211 may be included in a device (e.g., a mobile phone, a PDA, an E-book, and so forth) that, in turn, also includes the transmitting device 210, and that the reconstruction device 251 may each be included in another device, that, in turn, also includes the receiving device 250. Given the teachings of the present principles provided herein, these and other variations and implementations of the elements of FIG. 2 are readily contemplated by one of ordinary skill in this and related arts, according to the present principles.

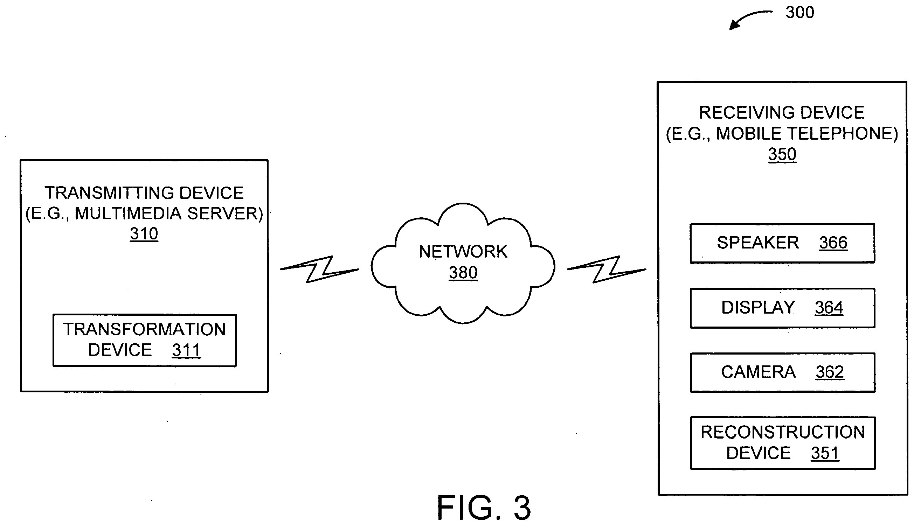

Turning to FIG. 3, another exemplary system for transferring multimedia content using an existing digital sound transfer protocol is indicated generally by the reference numeral 300.

The system 300 includes a transformation device 311 and a reconstruction device 351. In an embodiment, the transformation device 311 is disposed in a transmitting device 310, and the reconstruction device 351 is disposed in a receiving device 350.

In an embodiment, the transmitting device 310 is implemented as a multimedia server and the receiving device 350 is implemented as a mobile telephone. Of course, implementations of the transmitting device 310 and the receiving device 350 are not limited to solely servers and mobile telephones and, thus, other types of devices may also be used, according to the present principles.

Communications between the transmitting device 310 and the reconstruction device 351 are performed over one or more networks (hereinafter simply "network" for brevity) 380.

In the case when the receiving device 350 is implemented as a mobile telephone, the receiving device 350 may include a display 364 and a speaker 366. The receiving device 350 may or may not also include a camera 362. The user of the mobile telephone may place an order for, for example, a movie that is represented as an MPEG-2 file. The transformation device 311 in the transmitting device 310 (e.g., the server) may be used to transform the MPEG-2 file into a sound file. The reconstruction device 351 in the receiving device 350 may be used to reconstruct the MPEG-2 file from the sound file after the sound file is transferred over the network 380 using, for example, the existing digital sound transfer protocol of the network 380. The display device 364 in the receiving device 350 may be used to display a video portion of the multimedia content corresponding to the reconstructed multimedia file (e.g., the reconstructed MPEG-2 file), and the speaker 366 in the receiving device 350 may be used to audibly reproduce an audio portion of the multimedia content corresponding to the reconstructed multimedia file.

It is to be appreciated that the elements and arrangement thereof of the system 300 of FIG. 3 are merely illustrative. Thus, given the teachings of the present principles provided herein, one of ordinary skill in this and related arts will contemplate this and various other elements and corresponding arrangements, and variations thereof, according to the present principles. Accordingly, in other embodiments, one or more elements may be omitted and/or one or more elements may be added, and/or different configurations of the elements may exist, according to the present principles.

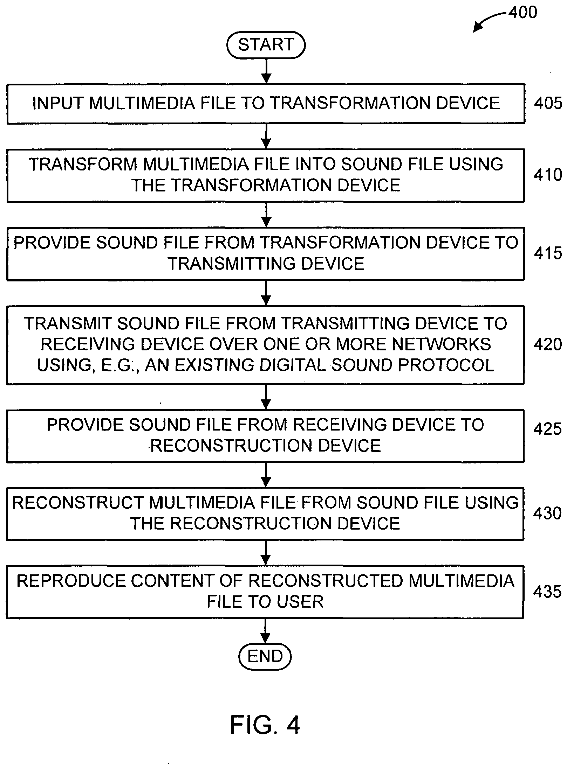

Turning to FIG. 4, an exemplary method for transferring multimedia content using an existing digital sound transfer protocol is indicated generally by the reference numeral 400. It is to be appreciated that while the method 400 of FIG. 4 is described with respect to the elements of FIG. 2 for the sake of illustration, it is equally applicable to the corresponding elements of FIG. 3.

At step 405, a multimedia file, representative of multimedia content, is input to a transformation device 211. In an embodiment, the multimedia file may represent
one or more of, for example, data, images, and video. Moreover, the multimedia file may be a combination of, for example, audio and video.

At step 410, the multimedia file is transformed into a sound file using the transformation device 211. In an embodiment, the sound file may be, for example, a WAV file.

At step 415, the sound file is provided from the transformation device 211 to the transmitting device 210. In an embodiment, such as that shown and described with respect to FIG. 2, where the transformation device 211 is disposed in the transmitting device 210, step 415 may simply involve, for example, transferring the sound file over a bus, and so forth.

At step 420, the sound file is transmitted from the transmitting device 210 to the receiving device 250 over one or more networks 280 using, for example, an existing digital sound transfer protocol.

At step 425, the sound file received by the receiving device 250 is provided to the reconstruction device 251.

At step 430, the multimedia file is reconstructed from the sound file using the reconstruction device 251. In an embodiment, the multimedia content as represented by the multimedia file reconstructed by the reconstruction device 251 is identical to the multimedia content prior to transformation by the transformation device 211.

At step 435, the content of the reconstructed multimedia file is reproduced (e.g., displayed and/or audibly reproduced) to a user.

The functionality of the transformation device 211 and the reconstruction device 251 will be described in further detail herein below.

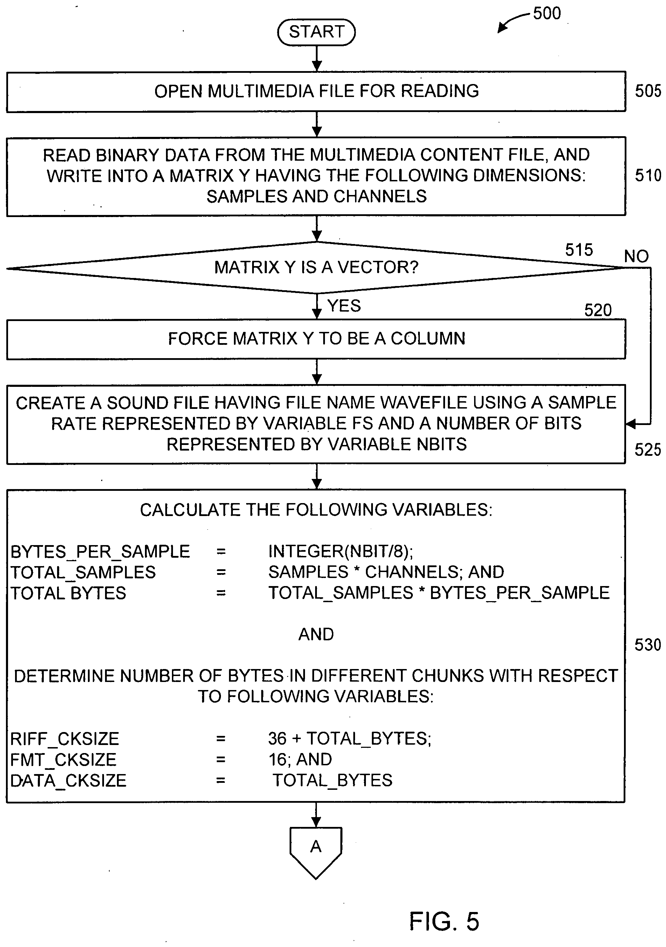

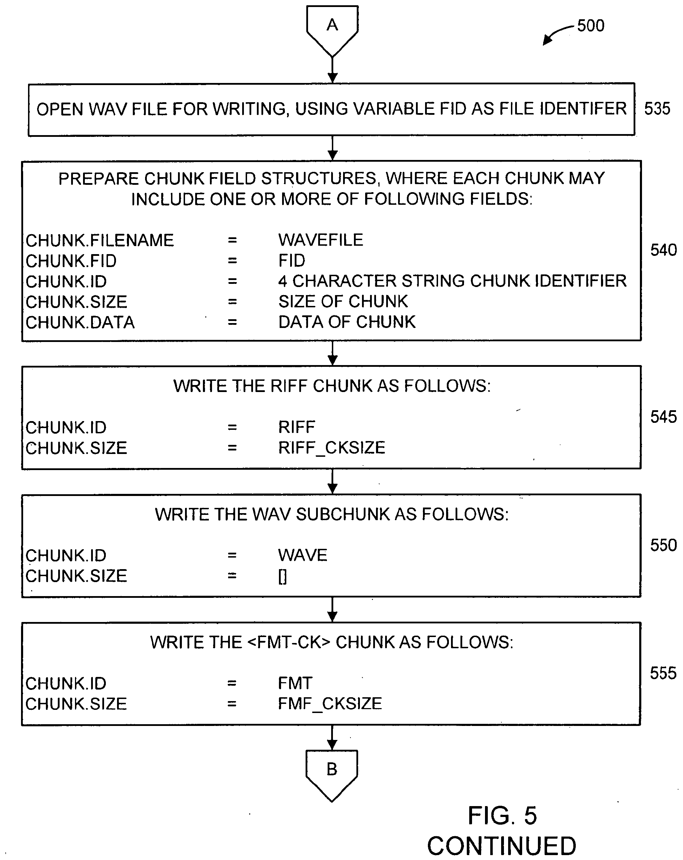

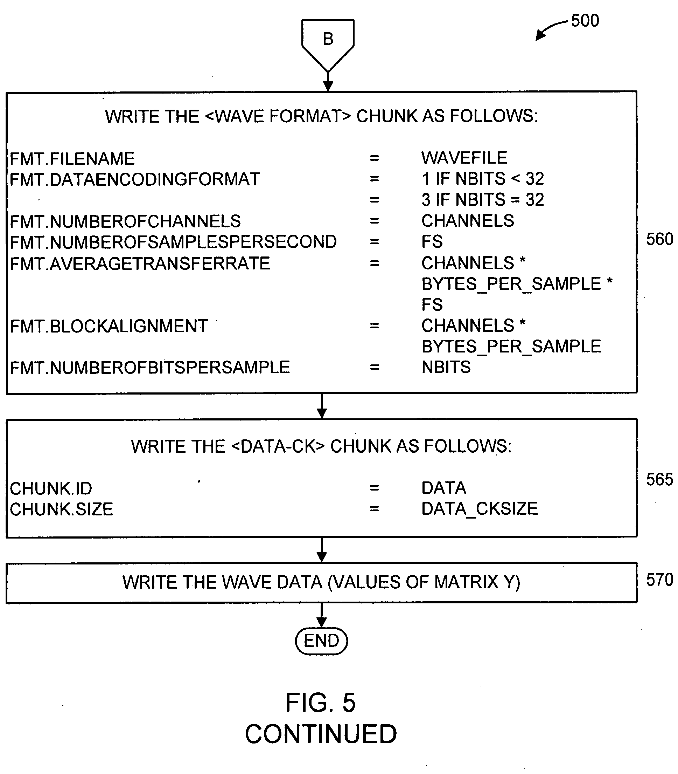

Turning to FIG. 5, an exemplary method for transforming a multimedia file into a sound file in accordance with an embodiment of the present principles is indicated generally by the reference numeral 500. In an embodiment, the method 500 corresponds to step 410 of the method 400 of FIG. 4.

At step 505, a multimedia content file is opened for reading.

At step 510, binary data is read from the multimedia content file, and written into a matrix Y with dimensions represented by "samples" and "channels". The dimension "samples" represents the number of lines (rows) of the matrix Y, and the dimension "channels" represents the number of columns of matrix Y.

At step 515, it is determined whether the matrix Y is a vector. If so, then the method proceeds to step 520. Otherwise, the method proceeds to step 525.

At step 520, the matrix Y is forced to be a column.

At step 525, create a sound file having the file name wavefile using a sample rate represented by a variable "FS" (specified in, e.g., Hertz) and a number of bits represented by a variable hereinafter referred to as "NBITS". In an embodiment, the value of NBITS is restricted to one of 8, 16, 24, or 32.

At step 530, the following variables are calculated: bytes_per_sample; total_samples; and total_bytes. In an embodiment, the variables are calculated as follows (where the operator "/" indicates division, the operator "*" indicates multiplication, and the operator "+" indicates addition):

| | | | |
|---|---|---|---|
| - | bytes_per_sample | = | integer(NBITS/8) |
| - | total_samples | = | samples * channels |
| - | total_bytes | = | total_samples * bytes_per_sample |

Moreover, at step 530, the number of bytes in different chunks is determined with respect to the following variables: riff_cksize; fmt_cksize; and data_cksize. In an embodiment, the number of bytes in different chunks is calculated as follows:

| | | | |
|---|---|---|---|
| - | riff_cksize | = | 36 + total_bytes |
| - | fmt_cksize | = | 16 |
| - | data_cksize | = | total_bytes. |

At step 535, the WAV file is opened for writing, using a variable "fid" as the file identifier.

At step 540, chunk field structures are prepared. In an embodiment, each chunk may include one or more of the following fields:

| | | |
|---|---|---|
| - | chunk.filename: | wavefile |
| - | chunk.fid: | fid |
| - | chunk.ID: | 4 character string chunk identifier |
| - | chunk.Size: | size of chunk |
| - | chunk.Data | data of chunk |

In an embodiment, the first two fields (chunk.filename and chunk.fid) are identical for all chunks.

At step 545, the RIFF chunk (but not the chunk data) is written as follows:

| | | | |
|---|---|---|---|
| - | chunk.ID | = | "RIFF |
| - | chunk.Size | = | riff_cksize |

At step 550, the WAV subchunk (but not the chunk data) is written as follows:

| | | | |
|---|---|---|---|
| - | chunk.ID | = | "WAVE" |
| - | chunk.Size | = | [] |

At step 555, the <fmt-ck> chunk (but not the chunk data) is written as follows:

| | | | |
|---|---|---|---|
| - | chunk.ID | = | "fmt" |
| - | chunk.Size | = | fmf_cksize |

At step 560, the <wave format> chunk is written as follows with the following components:

| | | |
|---|---|---|
| fmt.filename | = | wavefile |
| fmt.DataEncodingFormat | = | 1 if NBITS < 32 |
| | = | 3 if NBITS = 32 |
| fmt.NumberOfChannnels | = | channels |
| fmt.NumberOfSamplesPerSecond | = | FS |
| fmt.AverageTransferRate | = | channels * bytes_per_sample * FS |
| fmt.BiockAlignment | = | channels * bytes_per_sample |
| fmt.NumberOfBitsPerSample | = | NBITS |

At step 565, the <data-ck> chunk is written as follows:

| | | |
|---|---|---|
| chunk.ID | = | data |
| chunk.Size | = | data_cksize |

At step 570, the wave data (values of matrix Y) is written. It is to be appreciated that step 570 involves the <wave format> structure to be passed in order to obtain the wavefile.

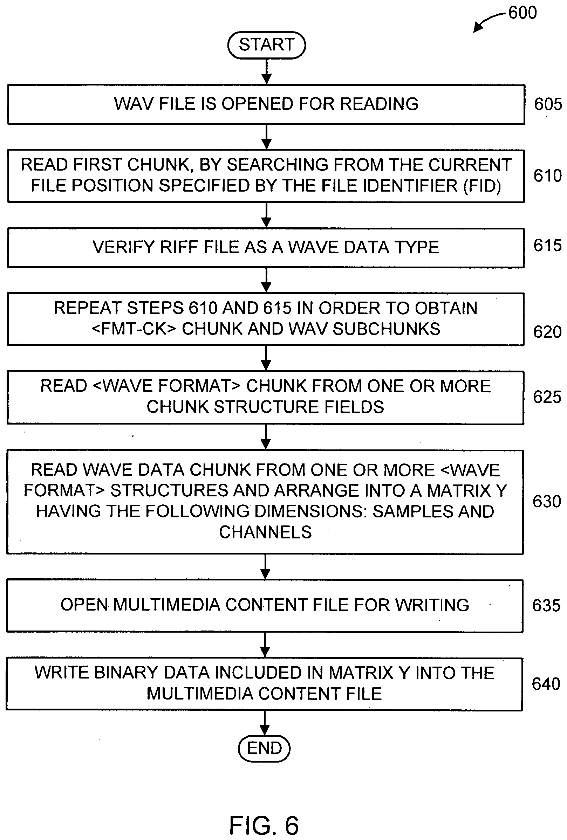

Turning to FIG. 6, an exemplary method for reconstructing a multimedia file from a sound file in accordance with an embodiment of the present principles is indicated generally by the reference numeral 600. In an embodiment, the method 600 corresponds to step 430 of the method 400 of FIG. 4.

At step 605, the WAV file is opened for reading, using the variable fid as the file identifier.

At step 610, the first chunk is read, by searching from the current file position specified by the file identifier (fid).

At step 615, the RIFF file is verified as a wave data type.

At step 620, steps 610 and 615 are repeated in order to obtain <fmt-ck> chunk and the WAV subchunks.

At step 625, <wave format> chunk is read from one or more chunk structure fields.

At step 630, the wave data chunk is read from one or more <wave format> structures and arranged into a matrix Y having the following dimensions: samples; and channels.

At step 635, a multimedia content file is opened for writing.

At step 640, the binary data included in matrix Y is written into the multimedia content file (opened at step 635).

It is to be appreciated that embodiments of the present principles may be readily performed to obtain the intended result. For example, consider the following illustrative example. A video sequence encoded using MPEG-4 and having a file size of 227,562 KB, with a resolution of 640x480 and a duration of 44 minutes is transformed into a WAV file (e.g., as per step 410 of the method 400 of FIG. 4 and/or steps 505-570 of the method 500 of FIG. 5) in less than 50 seconds. The reciprocal process (e.g., as per step 430 of the method 400 of FIG. 4 and/or steps 605-640 of the method 600 of FIG. 6) also takes no more than 50 seconds. These results are obtained with a personal computer of the following type, with the following characteristics: TOSHIBA MSAT010AIV10 with 1 GB of RAM memory and an INTEL CENTRINO DUO T2400 processor having a processor speed of 1.83GHz. The CPU time for the transformation depends on the characteristics of the video to be processed.

As is evident to one of ordinary skill in this and related arts, the present principles have broad applicability in many fields. For example, the present principles may be used, but are not limited to, the following applications: mobile telephony; transmission of television by satellite; and so forth.

An application of the present principles related to mobile telephony will now be described. It is to be appreciated that FIGS. 2 and 3 illustrate examples of systems involving mobile telephony.

As noted above, the second generation of Global System for Mobile Communications (GSM) in Europe and the Personal Communications Service (PCS) in the United States are both limited in their capability with respect to transferring multimedia content including, for example, video content. Moreover, while the Universal Mobile Telecommunications System (UMTS) provides one solution for transferring multimedia content using a telephony network, the UMTS also includes at least one significant disadvantage. Namely, the cost is very high for each operator and, consequently, for the client as well.

Advantageously, the present principles provides a solution to transferring multimedia content that is accurate and less complex than prior art approaches, while doing so at a very low cost.

In a mobile telephony embodiment, two new functionalities may be added into the existing mobile telephone, such as one based on, but not limited to, for example, GSM, PCS, and/or UMTS. These two new functionalities involve the transformation of multimedia content into digital sounds, and the corresponding reciprocal process.

The purpose of the first transformation process in the mobile telephone is to transform a video sequence, for example, captured by an integrated camera of the mobile telephone, into digital sound. This same digital sound will be transported to another mobile telephone using an existing protocol of GSM, PCS, UMTS, and so forth.

The mobile operator could also use the first transformation process to transform a film into digital sound, and then send this sound to the client's mobile telephone.

The purpose of the second transformation process is to re-transform the received digital sounds, as included in the received file (e.g., a WAV file), into, e.g., a video sequence or into a film from a mobile telephony operator or from another mobile telephone user.

Advantageously, the present principles provide a solution to the saturation problem of the prior art and to the rarity of available frequencies for use in transferring multimedia content over a telephony network. Embodiments of the present principles allow a mobile telephone operator to use its usual frequency (i.e., the frequency typically reserved for voice communications) or any other frequency to transport multimedia content, with essentially no significant extra cost.

Thus, embodiments of the present principles will be able to use existing equipment and will not suffer from the present problem of scarcity of available frequencies. Moreover, embodiments of the present principles will contribute to environmental protection in that no extra relay stations will need to be fabricated and maintained to support the feature of transferring multimedia content over a mobile telephony network in accordance with the present principles.

Further, in the case of an area without a network of telephony or satellite coverage, the present principles allow for the transfer of multimedia content by radio waves and the subsequent reconstruction of such content on, for example, a display screen and/or one or more speakers.

It is to be appreciated that the present principles may be implemented with respect to any network capable of carrying digital sounds. A film recording in high definition will be able to transit to a frequency other than that specified for transmission of high definition multimedia content, while maintaining the high definition multimedia content intact at the receiving end.

It is to be further appreciated that a significant advantage is gained by using a digital sound file to transfer a multimedia file. For example, the use of a digital sound file allows the digital sound file and, hence, the multimedia content represented thereby, to be transmitted and received using a protocol that is typically reserved for voice communications and which is the prevalent protocol used in telephony applications. In this way, the use of a separate protocol (dedicated for multimedia transmissions) and, in some cases, a separate channel (dedicated for multimedia transmissions), may be avoided. Further in this way, the expensive cost and other undesirable deficiencies associated with the prior art approaches are avoided.

A description will now be given of some of the many attendant advantages/features of the present invention, some of which have been mentioned above. For example, one advantage/feature is a system for processing multimedia content for transfer over one or more networks, where the system includes a transformation device and a reconstruction device. The transformation device is for transforming a multimedia file into a sound file for subsequent transfer over the one or more networks using an existing digital sound transfer protocol. The multimedia file represents the multimedia content. The reconstruction device is for reconstructing the multimedia content from the sound file, after the sound file has been transferred.

Another advantage/feature is the system having the transformation device and the reconstruction device as described above, wherein the one or more networks include a telephony network, and the existing digital sound transfer protocol corresponds to an existing voice communications transfer protocol used by the telephony network.

Yet another advantage/feature is the system having the transformation device and the reconstruction device as described above, wherein at least one of the one or more networks is restricted to transferring voice communications using a protocol that is different than that used for multimedia, and the existing digital sound transfer protocol corresponds to the protocol used for voice communications.

Moreover, another advantage/feature is the system having the transformation device and the reconstruction device as described above, wherein at least one of the transformation device and the reconstruction device is included in a mobile telephone having at least one of a camera capable of capturing a video sequence from which the multimedia file is generated and a display capable of displaying at least a portion of the multimedia content after reconstruction thereof.

Further, another advantage/feature is the system having the transformation device and the reconstruction device as described above, wherein the transformation device transforms the multimedia file into the sound file using a lossless transformation.

Also, another advantage/feature is the system having the transformation device and the reconstruction device as described above, where at least one of the one or more networks corresponds to at least one of the Personal Communications Service, the second generation of Global System for Mobile Communications (GSM), and the Universal Mobile Telecommunications System.

Additionally, another advantage/feature is the system having the transformation device and the reconstruction device as described above, wherein the multimedia file includes at least one video sequence and corresponding audio, which are both transformed into representative sound for inclusion into the sound file.

Moreover, another advantage/feature is a system for transferring multimedia content, where the system includes a transformation device, one or more networks, and a reconstruction device. The transformation device is for transforming a multimedia file into a sound file for subsequent transfer. The multimedia file represents the multimedia content. The one or more networks have an existing digital sound transfer protocol. The reconstruction device is for reconstructing the multimedia content from the sound file, after the sound file has been transferred. The sound file is transferred from the transformation device to the reconstruction device over the one or more networks using the existing digital sound transfer protocol.

Further, another advantage/feature is the system having the transformation device and the reconstruction device as described above, wherein the one or more networks include a telephony network, and the existing digital sound transfer protocol corresponds to an existing voice communications transfer protocol used by the telephony network.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

## Claims

1. A system for processing multimedia content for transfer over one or more networks, said multimedia content being represented by a multimedia file, said multimedia file including a video component and an audio component, comprising:
a transformation device (211, 311) for losslessly transforming binary data read from said multimedia file into a digital sound file in WAV format, said digital sound file being transferred over the one or more networks using an existing digital sound transfer protocol to a reconstruction device; and
said reconstruction device (251, 351) for reconstructing the multimedia content from the digital sound file, after the digital sound file has been transferred.

2. The system of claim 1, wherein the one or more networks comprise a telephony network, and the existing digital sound transfer protocol corresponds to an existing voice communications transfer protocol used by the telephony network.

3. The system of claim 1, wherein at least one of the one or more networks is restricted to transferring voice communications using a protocol that is different than that used for multimedia, and the existing digital sound transfer protocol corresponds to the protocol used for voice communications.

4. The system of claim 1, wherein at least one of said
transformation device (211) and said reconstruction device (251) is comprised in a mobile telephone having at least one of a camera (262) capable of capturing a video sequence from which the multimedia file is generated and a display (264) capable of displaying at least a portion of the multimedia content after reconstruction thereof.

5. A method for processing multimedia content for transfer over one or more networks, said multimedia content being represented by a multimedia file, said multimedia file including a video component and an audio component, comprising:
losslessly transforming (410) binary data read from said multimedia file into a digital sound file in WAV format, and transferring said digital sound file over the one or more networks using an existing digital sound transfer protocol to a reconstruction device; and
reconstructing (430) the multimedia content from the digital sound file using said reconstruction device, after the digital sound file has been transferred.

6. The method of claim 5, wherein the one or more networks comprise a telephony network, and the existing digital sound transfer protocol corresponds to an existing voice communications transfer protocol used by the telephony network.

7. The method of claim 5, wherein at least one of the one or more networks is restricted to transferring voice communications using a protocol that is different than that used for multimedia, and the existing digital sound transfer protocol corresponds to the protocol used for voice communications.

8. The method of claim 5, wherein said transforming step (410) is performed by a mobile telephone having a camera, and the method further comprises generating the multimedia file using a video sequence captured by the camera.

9. The method of claim 5, wherein the multimedia file comprises at least one video sequence and corresponding audio, which are both transformed into representative digital sound representing the at least one video sequence and corresponding audio for inclusion into the sound file.

## Patentansprüche

1. System zur Verarbeitung von Multimediainhalt zum Transfer über ein oder mehrere Netzwerke, wobei der Multimediainhalt durch eine Multimediadatei repräsentiert ist, wobei die Multimediadatei eine Videokomponente und eine Audiokomponente beinhaltet, umfassend:
eine Transformationsvorrichtung (211, 311) zum verlustfreien Transformieren von aus der Multimediadatei gelesenen binären Daten in eine Digitaltondatei im WAV-Format, wobei die Digitaltondatei unter Verwendung eines existierenden Digitaltontransferprotokolls über das eine oder mehrere Netzwerke an eine Rekonstruktionsvorrichtung übertragen wird; und
die Rekonstruktionsvorrichtung (251, 351) zum Rekonstruieren des Multimediainhalts aus der Digitaltondatei, nachdem die Digitaltondatei übertragen wurde.

2. System nach Anspruch 1, worin das eine oder mehrere Netzwerke ein Telefonnetz umfassen und das existierende Digitaltontransferprotokoll einem von dem Telefonnetz benutzten existierenden Sprachkommunikationstransferprotokoll entspricht.

3. System nach Anspruch 1, worin mindestens eines des einen oder der mehreren Netzwerke auf Sprachkommunikationstransfer unter Verwendung eines Protokolls, das sich von dem für Multimedia benutzten unterscheidet, beschränkt ist, und das existierende Digitaltontransferprotokoll dem für die Sprachkommunikation benutzten Protokoll entspricht.

4. System nach Anspruch 1, worin mindestens eine der Transformationsvorrichtung (211) und der Rekonstruktionsvorrichtung (251) in einem Mobiltelefon enthalten ist, das mindestens eine einer Kamera (262), die imstande ist, eine Videosequenz zu erfassen, aus der die Multimediadatei erzeugt wird, und einer Anzeige (264), die zum Anzeigen mindestens eines Abschnitts des Multimediainhalts nach Rekonstruktion davon imstande ist, aufweist.

5. Verfahren zum Verarbeiten von Multimediainhalt zum Transfer über eines oder mehrere Netzwerke, wobei der Multimediainhalt durch eine Multimediadatei repräsentiert ist, wobei die Multimediadatei eine Videokomponente und eine Audiokomponente beinhaltet, umfassend:
verlustfreies Transformieren (410) von aus der Multimediadatei gelesenen binären Daten in eine Digitaltondatei im WAV-Format, und Übertragen der Digitaltondatei unter Verwendung eines existierenden Digitaltontransferprotokolls über das eine oder mehrere Netzwerke an eine Rekonstruktionsvorrichtung; und
Rekonstruieren (430) des Multimediainhalts aus der Digitaltondatei unter Verwendung der Rekonstruktionsvorrichtung, nachdem die Digitaltondatei übertragen wurde.

6. Verfahren nach Anspruch 5, worin das eine oder mehrere Netzwerke ein Telefonnetz umfassen und das existierende Digitaltontransferprotokoll einem von dem Telefonnetz benutzten existierenden Sprachkommunikationstransferprotokoll entspricht.

7. Verfahren nach Anspruch 5, worin mindestens eines des einen oder der mehreren Netzwerke auf Sprachkommunikationstransfer unter Verwendung eines Protokolls, das sich von dem für Multimedia benutzten unterscheidet, beschränkt ist, und das existierende Digitaltontransferprotokoll dem für die Sprachkommunikation benutzten Protokoll entspricht.

8. Verfahren nach Anspruch 5, worin der Transformierungsschritt (410) durch ein eine Kamera aufweisendes Mobiltelefon durchgeführt wird und das Verfahren ferner das Erzeugen der Multimediadatei unter Verwendung einer von der Kamera erfassten Videosequenz umfasst.

9. Verfahren nach Anspruch 5, worin die Multimediadatei mindestens eine Videosequenz und entsprechendes Audio umfasst, die beide in repräsentativen Digitalton transformiert werden, der die mindestens eine Videosequenz und entsprechendes Audio zur Einbeziehung in die Tondatei repräsentiert.

## Revendications

1. Un système permettant de traiter un contenu multimédia à des fins de transfert sur un ou plusieurs réseaux, ledit contenu multimédia étant représenté par un fichier multimédia, ledit fichier multimédia incluant un composant vidéo et un composant audio, comprenant :
un dispositif de transformation (211, 311) permettant de transformer sans perte des données binaires lues dans ledit fichier multimédia en un fichier son numérique en format WAV, ledit fichier son numérique étant transféré sur le ou les réseaux en utilisant un protocole de transfert de son numérique existant vers un dispositif de reconstruction ; et
ledit dispositif de reconstruction (251, 351) permettant de reconstituer le contenu multimédia du fichier son numérique, après le transfert dudit fichier son numérique.

2. Le système selon la revendication 1, dans lequel le ou les réseaux comprennent un réseau de téléphonie, et le protocole de transfert de son numérique existant correspond à un protocole de transfert de communications vocales existant utilisé par le réseau de téléphonie.

3. Le système selon la revendication 1, dans lequel le ou les réseaux sont limités au transfert de communications vocales existant en utilisant un protocole qui est différent de celui qui est utilisé pour le multimédia, et le protocole de transfert de son numérique existant correspond au protocole utilisé pour des communications vocales existant.

4. Le système selon la revendication 1, dans lequel soit ledit dispositif de transformation (211) soit ledit dispositif de reconstruction (251) est compris dans un téléphone mobile ayant, soit une caméra (262) pouvant capturer une séquence vidéo à partir de laquelle le fichier multimédia est généré, soit un affichage (264) pouvant afficher au moins une partie du contenu multimédia après sa reconstitution.

5. Un procédé permettant de traiter un contenu multimédia à des fins de transfert sur un ou plusieurs réseaux, ledit contenu multimédia étant représenté par un fichier multimédia, ledit fichier multimédia incluant un composant vidéo et un composant audio, consistant à :
transformer sans perte (410) des données binaires lues dans ledit fichier multimédia en un fichier son numérique en format WAV, et transférer ledit fichier son numérique sur le ou les réseaux en utilisant un protocole de transfert de son numérique existant vers un dispositif de reconstruction ; et
reconstituer (430) le contenu multimédia du fichier son numérique en utilisant ledit dispositif de reconstruction, après le transfert dudit fichier son numérique.

6. Le procédé selon la revendication 5, dans lequel le ou les réseaux comprennent un réseau de téléphonie, et le protocole de transfert de son numérique existant correspond à un protocole de transfert de communications vocales existant utilisé par le réseau de téléphonie.

7. Le procédé selon la revendication 5, dans lequel le ou les réseaux sont limités au transfert de communications vocales existant en utilisant un protocole qui est différent de celui qui est utilisé pour le multimédia, et le protocole de transfert de son numérique existant correspond au protocole utilisé pour des communications vocales.

8. Le procédé selon la revendication 5, dans lequel ladite étape de transformation (410) est effectuée par un téléphone mobile ayant une caméra, et le procédé consiste en outre à générer le fichier multimédia en utilisant une séquence vidéo capturée par la caméra.

9. Le procédé selon la revendication 5, dans lequel le fichier multimédia comprend une ou plusieurs séquences vidéo et leur séquence audio correspondant, qui sont toutes deux transformées en son numérique représentatif représentant la ou les séquences vidéo et leur séquence audio correspondant à inclure dans le fichier son.
